# DEMANDE DE BREVET EUROPEEN

(11) **EP 1 124 373 A1**
(43) Date de publication de la demande: **16.08.2001**
(21) Numéro de dépôt: 01400204.2
(22) Date de dépôt: 25.01.2001
(51) Int. Cl.: H04N 5/445

(54) **Appareil et procédé d'affichage de messages sur un écran de télévision**

(30) Priorité: 09.02.2000 FR 0001581
(71) Demandeur: SAGEM SA, 75116 Paris (FR)
(72) Inventeur: Meulle, M. Philippe, 78300 Poissy (FR)
(74) Mandataire: Schmit, Christian Norbert Marie

(57) **Abrégé**

L'invention concerne un appareil et un procédé d'affichage sur un écran de télévision de messages reçus depuis le réseau internet. Les messages sont affichés en combinaison avec des signaux vidéo. L'invention met en oeuvre des moyens pour déterminer une fenêtre graphique (119), destinée à afficher les messages reçus, sur un écran de télévision. Cette fenêtre graphique est limitée en hauteur de façon à ce que la consultation de messages soit compatible avec la visualisation de l'image vidéo, et les textes des messages apparaissent de préférence de façon défilante.

## Description

La présente invention a pour objet un appareil de réception de signaux télévisuels capable de recevoir et d'afficher des messages, reçus via le réseau Internet, simultanément à des images de télévision. L'invention concerne également un procédé d'affichage sur un écran de télévision de messages reçus depuis le réseau Internet.

Par signaux télévisuels, on désigne l'ensemble des signaux qui peuvent être émis par un opérateur de télévision. L'appareil selon l'invention peut ainsi être tout aussi bien intégré dans un décodeur, dans un téléviseur, dans un magnétoscope ou dans tout autre appareil susceptible de recevoir les signaux de télévision. D'une façon générale le domaine de l'invention est celui de la télévision qu'elle soit analogique ou numérique. L'invention s'inscrit dans le cadre d'une synergie entre deux domaines distincts qui sont le domaine de la télévision et le domaine des communications Internet. Elle a pour but d'offrir un support visuel qui autorise la lecture de messages reçus via le réseau Internet sur un écran de télévision tout en maintenant un format d'image vidéo suffisant pour ne pas déranger un téléspectateur. L'incrustation de messages écrits Internet est réalisée de façon non invasive pour le téléspectateur.

Plusieurs techniques d'affichage simultané existent aujourd'hui. IL existe par exemple des téléviseurs capables de réaliser une incrustation d'image. A partir d'un flux d'informations relatives à des programmes de télévision, ces téléviseurs réalisent une superposition de deux images correspondant à des programmes de télévision différents. Un téléspectateur peut ainsi visualiser simultanément deux programmes de télévision, les programmes étant émis par des opérateurs de télévision distincts. Désormais, certains téléviseurs hauts de gamme sont même capables d'afficher simultanément plus de deux programmes de télévision. Cependant, les procédés de superposition d'images utilisés font qu'une partie non négligeable de l'image initiale, à laquelle est venue se superposer une autre image, est occultée. Par ailleurs, ces techniques ne permettent d'afficher que des images issues des opérateurs de télévision et ne combinent en aucun cas des signaux télévisuels avec des signaux issus d'un réseau Internet.

Dans l'état de la technique on connaît également l'affichage d'éléments incrustés sur une image vidéo. Ces éléments incrustés sont appelés des OSD (On Screen Display dans la littérature anglaise). Les OSD sont des éléments d'images d'origine numérique qui sont préalablement programmés avant leur affichage. Ils peuvent être utilisés par des opérateurs de télévision qui peuvent ainsi envoyer simultanément à leur émission un logo qui permet aux téléspectateurs d'identifier instantanément la chaîne qu'ils regardent. Les OSD sont également utilisés pour proposer un ensemble de fonctionnalités aux téléspectateurs sous forme de menus affichés sur l'écran. Mais encore une fois, cette technique ne propose pas d'affichage simultané de signaux issus d'opérateurs de télévision et de signaux provenant du réseau Internet.

Par ailleurs, dans le cas des systèmes informatiques, un utilisateur d'un ordinateur connecté sur le réseau Internet ou sur un réseau local à son entreprise peut être averti par un signal sonore ou visuel de l'arrivée d'un message qui lui est destiné. Cependant, lorsqu'il veut accéder à ce message, il doit ouvrir une nouvelle application qui occulte le plus souvent fortement la précédente application sur laquelle il travaillait. Là non plus, des signaux télévisuels et des signaux issus du réseau Internet ne cohabitent pas.

Enfin, dans l'état de la technique, on connaît aussi l'affichage d'images vidéos grâce à des outils de navigation qui existent pour l'affichage de l'information issue du réseau Internet. Ces images arrivent alors par un canal dont le débit est en général limité par le nombre d'utilisateurs connectés au moment du téléchargement. Dans la plupart des cas ce débit est trop faible pour permettre l'obtention d'une animation de bonne qualité. En effet les normes spécifiant la visioconférence prévoient par exemple un débit minimum de 64 kilobits par seconde, ce qui est loin d'être le débit minimum alloué à chaque utilisateur lorsqu'il se connecte au réseau Internet. La vidéo par Internet connaît donc des taux de rafraîchissement de l'ordre de une image toutes les deux à trois secondes, qui peuvent même atteindre une image toutes les quinze secondes. De plus le format de l'image est alors loin d'être en plein écran. Par ailleurs l'utilisation d'un tel système nécessite l'emploi d'un clavier et d'une souris qui ne sont pas toujours d'un emploi très instinctif, notamment lors de la sélection d'une émission de télévision.

L'appareil et le procédé d'affichage sur un écran de télévision de messages reçus depuis le réseau Internet selon l'invention permettent de pallier l'ensemble des problèmes qui viennent d'être décrits. A cet effet, l'invention met en oeuvre des moyens d'affichage de messages Internet sur un téléviseur en combinaison avec des signaux vidéo. En outre, l'invention propose des moyens pour déterminer une fenêtre graphique sur l'écran de télévision de telle sorte que cette fenêtre graphique, destinée à afficher les messages reçus via le réseau Internet, ne soit pas trop envahissante pour l'image de télévision. La place que la fenêtre graphique occupe est compatible avec la visualisation de l'image vidéo.

L'invention a donc pour objet un appareil de réception de signaux télévisuels comportant
- un module de réception desdits signaux,
- une unité de commande du module de réception,
- des moyens d'affichage pour afficher des images vidéo correspondant aux signaux télévisuels reçus
   caractérisé en ce qu'il comporte
- une interface pour se connecter au réseau Internet,
- une mémoire d'éléments à incruster sur l'image vidéo pour mémoriser notamment des textes de messages à afficher, reçus via le réseau Internet;
- un module de superposition pour superposer à l'image vidéo une fenêtre graphique destinée à afficher les textes des messages mémorisés.
- une mémoire de programmes et une mémoire de données pour recevoir, depuis le réseau Internet, et mémoriser des messages sous forme de données numériques, la mémoire de programmes comprenant une fonction de définition de la zone graphique pour limiter la fenêtre graphique à une ligne de texte
- un microprocesseur connecté au moyen d'un bus bidirectionnel de communication à l'interface de connexion au réseau Internet, aux différentes mémoires et au module de superposition, pour gérer le fonctionnement des différents éléments auxquels il est connecté.

La fenêtre graphique ainsi définie peut donc faire toute la largeur de l'écran de télévision, et avoir une hauteur de l'ordre d'une vingtaine de pixels. Dans cette fenêtre graphique, des messages sélectionnés sont affichés de façon défilante. La hauteur de la ligne de texte peut varier avec les dimensions de l'écran de télévision. L'appareil de réception selon l'invention propose par ailleurs un ensemble de fonctionnalités qui contribuent à rendre facile d'exécution différentes opérations de consultation des messages, tout en maintenant cette consultation et les différentes opérations qui lui sont associées non gênantes pour le téléspectateur.

Un autre objet de l'invention est un procédé d'affichage sur un écran de télévision de messages reçus depuis un réseau Internet comportant les étapes consistant à :
- établir, au moyen notamment d'une interface de communication, une connexion avec le réseau Internet ;
   caractérisé en ce qu'il comporte les étapes supplémentaires consistant à :

- mémoriser dans une mémoire de données des messages reçus depuis le réseau Internet;
- sélectionner des messages mémorisés ;
- afficher successivement et progressivement chaque message sélectionné dans une fenêtre graphique, limitée en hauteur à une ligne de texte, d'une image de télévision.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une structure interne simplifiée de l'appareil selon l'invention ;
- Figure 2 : un organigramme illustrant un exemple des différentes étapes que peut suivre un utilisateur de l'appareil selon l'invention pour consulter ses messages.

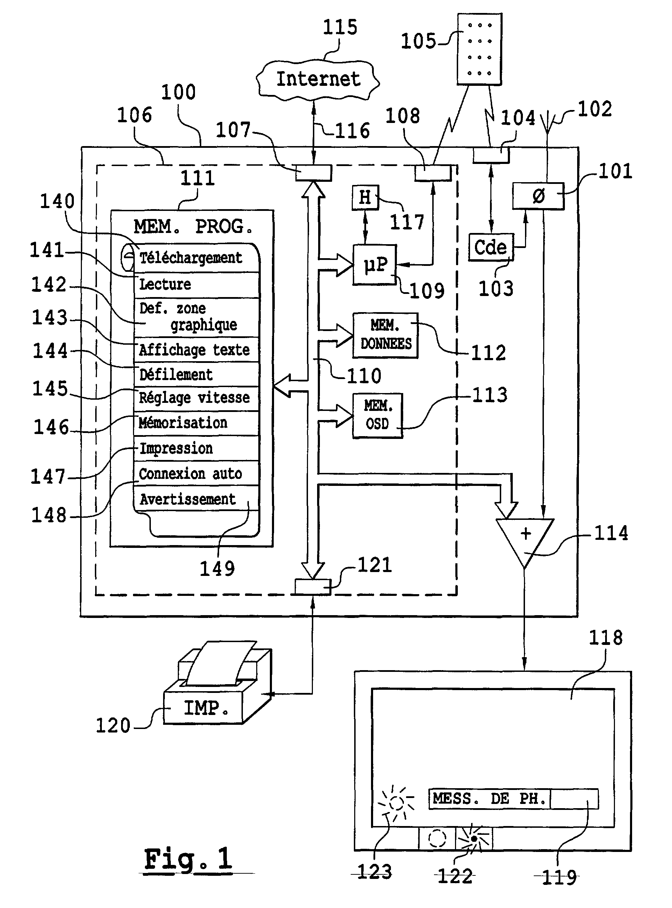

La figure 1 montre un appareil 100 selon l'invention. L'appareil 100 comporte un module de réception 101 de signaux télévisuels qui reçoit via une antenne 102 un flux d'informations de programme de télévision. Le module de réception 101 pourrait également être connecté à un réseau de télévision câblée ou à un système de réception par satellite. Le module de réception 101 peut par exemple être un décodeur. Par ailleurs, le module de réception 101 est connecté à une unité de commande 103 du module de réception 101. Le circuit de commande 103 indique au module de réception 101 quel programme de télévision il doit extraire du flux d'informations qu'il reçoit par l'antenne 102. Dans le cadre d'une réception analogique traditionnelle, il s'agit de l'accord d'un oscillateur du module de réception 101 sur la fréquence de la porteuse qui porte les informations du programme de télévision qui doit être extrait. Un premier capteur 104, dans cet exemple infrarouge, reçoit des signaux émis par une télécommande 105. Une cellule infrarouge du premier capteur 104 délivre un signal qui permet à l'utilisateur de contrôler l'unité de commande 103.

Un module de traitement des messages 106 de l'appareil 100 permet de gérer l'ensemble des opérations relatives à la réception et à l'affichage des messages obtenus via le réseau Internet. Le module de traitement des messages 106 comprend en outre une interface Internet 107, comprenant notamment un modem, et un deuxième capteur 108 qui est de préférence similaire au premier capteur 104. Les deux capteurs 104 et 108 peuvent recevoir des signaux d'une même télécommande. Dans une variante de l'invention les deux capteurs 104 et 108 peuvent être confondus. Un microprocesseur 109 est connecté au moyen d'un bus bidirectionnel de communication 110 à l'interface Internet 107, à une mémoire de programme 111, à une mémoire de données 112, à une mémoire d'éléments incrustés, ou mémoire d'OSD 113, et à une interface d'impression 121. L'ensemble de ces éléments appartient au module de traitement 106. Les signaux échangés sur le bus de communication peuvent être des signaux de commande, des signaux d'adresse, ou des signaux de données.

Un module de superposition 114 de l'appareil 100 reçoit, à une première entrée, des signaux véhiculés sur le bus bidirectionnel de communication 110. Le module de superposition 114 reçoit à une deuxième entrée les signaux télévisuels issus du module de réception 101. L'ensemble des éléments qui viennent d'être introduits peut appartenir à un même appareil de réception, par exemple un téléviseur. Cependant, toute autre répartition de ces éléments dans divers dispositifs peut être envisagée. Par exemple, le module de traitement des messages 106 peut être contenu dans un décodeur, les autres éléments décrits pouvant appartenir à un téléviseur, un magnétoscope ou un autre décodeur.

L'interface Internet 107 est reliée au réseau Internet 115 au moyen d'une liaison 116 bidirectionnelle. Une horloge 117 reliée au microprocesseur 109 permet de séquencer l'ensemble des opérations effectuées par le microprocesseur.

Le fonctionnement de l'appareil selon l'invention est à présent expliqué.

Lorsqu'une connexion Internet est établie entre l'appareil 100 et le réseau Internet 115 via l'interface Internet 107 et la liaison 116, des messages réservés sont téléchargés au moyen d'une fonction de téléchargement 140 de la mémoire de programme 111. Par message réservé on désigne l'ensemble des messages destinés aux utilisateurs potentiels de l'appareil 100.

Les messages sont mémorisés dans la mémoire de données 112. Un message ainsi mémorisé contient plusieurs informations telles que le nom de l'expéditeur, le nom du destinataire, la date et l'heure de l'émission, l'objet du message, le contenu du message et éventuellement un fichier joint attaché à ce message. Ces fichiers joints peuvent être par exemple des images, des tableaux, des plans.... Lorsqu'un utilisateur de l'appareil 100 veut lire ses messages sur un écran de télévision 118, il transmet via la télécommande 105 et le deuxième capteur 108 un ordre de lecture au microprocesseur 109.

Une fonction de lecture 141 de la mémoire de programme 111 est alors activée. La fonction lecture 141 cherche dans la mémoire de données 112 si des messages sont réservés au donneur d'ordre. Si c'est le cas, les textes des messages réservés, qui peuvent comprendre l'ensemble des données lisibles par l'utilisateur, sont stockés, successivement et progressivement, dans la mémoire d'OSD 113. Une fonction de définition de la zone graphique 142 est alors activée. Cette fonction fait apparaître une fenêtre graphique 119 sur l'image vidéo de l'écran de télévision 118. Selon l'invention, la fonction de définition de la zone graphique limite la fenêtre graphique à une ligne de texte. Ceci signifie que l'utilisateur de l'appareil 100 peut visionner les textes de ses messages ligne après ligne. La hauteur de la fenêtre graphique 119 ainsi définie est de quelques pixels, en général une vingtaine mais si l'écran de télévision 118 a une taille très importante, on peut aisément concevoir que la largeur de la zone graphique puisse augmenter proportionnellement.

Lorsqu'un utilisateur de l'appareil 100 souhaite visionner ses messages, c'est d'abord le nom de l'émetteur qui est affiché dans la fenêtre graphique. S'il souhaite lire le message de cet émetteur, il déclenche au moyen de la télécommande 105 une fonction 143 d'affichage du texte. La fonction d'affichage du texte 143 assure les transferts des données depuis la mémoire d'OSD 113 vers le module de superposition 114 qui combine les signaux télévisuels à la fenêtre graphique 119 qui va contenir les textes des messages. Une fonction de défilement 144 de la mémoire de programme 111 peut alors être mise en oeuvre de façon à ce que le texte du message lu défile dans la zone graphique 119. Cette fonction de défilement 144 peut s'exécuter de manière automatique dès que l'utilisateur a émis la volonté de visionner le texte du message, mais l'appareil selon l'invention peut proposer de déclencher cette fonction de défilement suite à une instruction de l'utilisateur.

L'utilisateur a par ailleurs accès à une fonction de réglage 145 de la vitesse de défilement qui lui permet d'accélérer, de ralentir, de stopper le défilement du message et même de revenir en arrière. L'affichage progressif des messages sélectionnés est ainsi contrôlé par des actions de retour et de contrôle de vitesse. L'ensemble des opérations de lecture et d'affichage impose un rafraîchissement régulier et fréquent de la mémoire d'OSD 113. En effet, dans cette mémoire, seuls les éléments qui vont être instamment affichés sont mémorisés. Une fois le message lu, l'utilisateur a la possibilité de conserver le message dans la mémoire de données 112 grâce à une fonction mémorisation 146. Le processus d'affichage, de défilement et de mémorisation des messages est alors repris pour chaque message non lu.

Dans le cas où un message contient un fichier joint du type image ou tableau, qui n'est par définition pas visible dans la fenêtre graphique 119 de l'écran de télévision 118 et qui n'est pas considéré comme du texte, l'utilisateur de l'appareil 100 a la possibilité de déclencher une fonction d'impression 147 de la mémoire de programmes 111. La fonction d'impression 147 déclenche l'impression automatique du contenu du fichier joint sur une imprimante 120 connectée à une sortie de l'interface d'impression 121 dont l'entrée est reliée au bus de communication 110. Ainsi, l'utilisateur de l'appareil 100 a la possibilité de prendre connaissance de façon discrète des fichiers joints dont l'affichage serait trop encombrant pour un téléspectateur. L'imprimante 120 et l'interface d'impression 121 constituent des moyens pour imprimer des messages mémorisés ou des éléments associés à ces messages.

Selon un mode de réalisation perfectionnée de l'invention, le microprocesseur 109 peut mettre en oeuvre une fonction de connexion automatique 148 de la mémoire de programme 111 qui établit le téléchargement automatique des messages réservés aux utilisateurs de l'appareil 100. La fonction de connexion automatique 148 peut notamment se déclencher automatiquement à des intervalles de temps réguliers, par exemple toutes les heures, grâce à l'horloge 117. Dans un autre mode de réalisation, la fonction de connexion automatique peut se déclencher à chaque mise sous tension de l'appareil 100. L'interface Internet 107 et la fonction de connexion automatique 148 constituent des moyens pour établir automatiquement une connexion au réseau Internet et mémoriser dans la mémoire de données des messages.

La fonction de connexion automatique 148 peut être mise en oeuvre de plusieurs façons: soit elle assure le téléchargement des messages réservés dans leur totalité, c'est à dire avec les éventuels fichiers joints; soit elle assure uniquement le téléchargement des textes des messages, sans les éventuels fichiers joints, afin de limiter le temps de connexion. Les éventuels fichiers joints pourront être téléchargés par le destinataire des messages quand ce dernier les consultera. Dans tous les cas, la fonction de téléchargement automatique 148 permet un gain de temps à l'utilisateur de l'appareil selon l'invention: en effet, lorsqu'il souhaite consulter ses messages, ceux-ci sont déjà mémorisés dans la mémoire de données, et il n'a pas, en conséquence, à attendre que les différentes opérations de connexion téléchargement s'effectuent.

L'ensemble des fonctions intervenant dans la mémoire de programmes peuvent être remplacés par des circuits intégrés remplissant les mêmes fonctions.

Lorsque l'écran de télévision 118 est en veille, un témoin lumineux 122 peut s'allumer pour signaler que des messages réservés ont été téléchargés pendant la veille de la télévision. Le témoin lumineux peut être alors allumé de façon continue, ou clignoter de façon à indiquer le nombre de messages mémorisés, ou encore adopter un clignotement propre au destinataire du message. Par ailleurs, lorsqu'un téléchargement automatique est effectué alors que l'écran de télévision est en marche, une fonction d'avertissement 149 peut permettre d'afficher sur l'image de télévision, de préférence dans la fenêtre graphique 119, un témoin lumineux 123 remplissant les mêmes fonctions que celui qui vient d'être décrit. Les témoins lumineux 122 et 123, et la fonction d'avertissement 143 constituent des moyens pour avertir de la présence de nouveaux messages mémorisés dans la mémoire de données 112.

Selon l'invention, l'ensemble des opérations que l'utilisateur peut effectuer doivent être exécutables, par soucis de confort, au moyen de la télécommande.

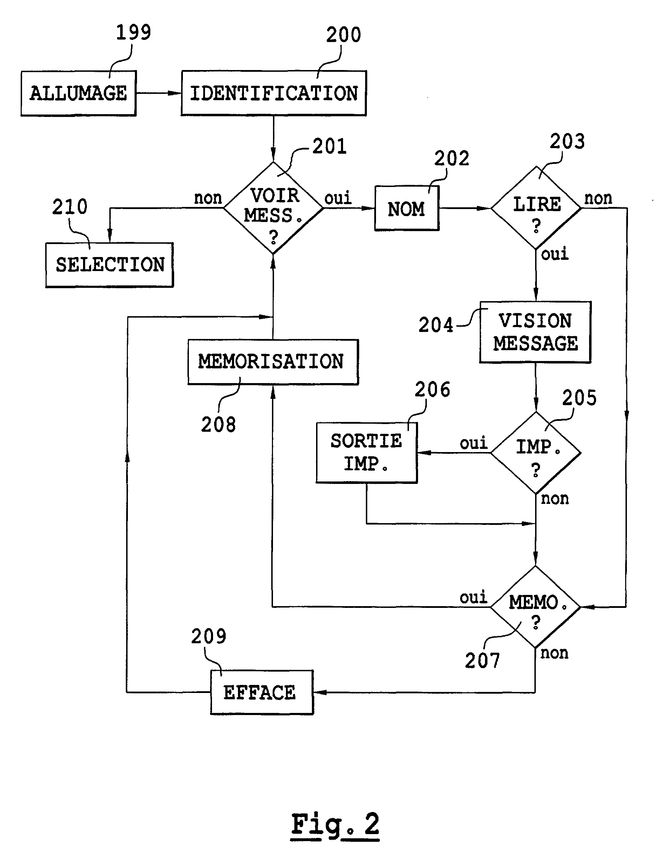

La figure 2 est un organigramme qui permet de rappeler les étapes essentielles du procédé selon l'invention que l'utilisateur peut mettre en oeuvre. Une étape 199 consiste en l'allumage de la télévision. Une étape 200 d'identification de l'utilisateur suit. Ainsi, seuls les messages qui lui sont réservés seront accessibles à l'utilisateur. Dans une étape de décision 201, l'utilisateur de l'appareil selon l'invention se voit proposer la possibilité de lire ses messages. S'il répond par l'affirmative, un premier nom d'expéditeur lui est proposé dans une étape 202. Dans une étape de décision 203, l'utilisateur peut manifester son souhait de lire ou non le contenu du message correspondant au nom qui lui est proposé. S'il répond une nouvelle fois par l'affirmative, le message est visionné dans une étape 204 dans la fenêtre graphique 119. Pour visionner ce message, l'utilisateur peut notamment utiliser la fonction de défilement 144 et de la fonction de réglage 145. Selon l'invention, la fenêtre graphique 119 peut alors être scindée en deux zones, une première zone affichant en permanence le nom de l'expéditeur du message, et une deuxième zone proposant le texte du message en lui-même. Une fois le message arrivé à son terme, une étape de décision 205 propose à l'utilisateur l'impression d'éventuels fichiers joints ou du texte du message lui-même. S'il désire cette impression, elle est réalisée dans une étape 206.

A l'issue de l'impression, ou dans le cas où l'impression n'aurait pas été souhaitée, une étape de décision 207 propose à l'utilisateur de mémoriser le message qu'il vient de lire. A l'issue de l'étape de décision 203, lorsque l'utilisateur ne souhaite pas lire son message, il passe directement à l'étape de décision 207 qui lui permet malgré tout de mémoriser le message non lu. S'il le souhaite, le message est mémorisé dans une étape 208 dans la mémoire de données 112. Si l'utilisateur ne souhaite pas mémoriser le message, ce dernier est effacé dans une étape 209.

Suite à l'opération de mémorisation 208, ou à l'étape d'effacement 209, l'étape de décision 201 lui propose de visionner le message suivant. Si l'utilisateur répond par l'affirmative, l'ensemble du processus est repris à partir de l'étape de visualisation d'un nom d'expéditeur 202. A l'étape de décision 201, si l'utilisateur ne souhaite pas lire un autre message, ou s'il n'a pas souhaité lire son premier message, il se voit proposer une étape de sélection 210. Dans l'étape de sélection 210, l'utilisateur a notamment la possibilité de régler un nombre de paramètres de l'appareil selon l'invention. Par exemple, il peut régler une vitesse de défilement des messages, il peut aussi décider de l'intervalle de temps entre deux connexions automatiques au réseau Internet, il peut régler les indicateurs lumineux indiquant la présence de messages, ...

L'étape de sélection 210 peut également permettre de revenir à une programmation initiale des paramètres. Cette programmation initiale des paramètres correspond, dans une application préférée de l'invention, à une configuration où la consultation des messages est la plus automatique possible, l'utilisateur ayant un minimum d'opérations à effectuer au moyen de la télécommande.

## Revendications

1. Appareil de réception (100) de signaux télévisuels comportant
- un module de réception (101) desdits signaux,
- une unité de commande (103) du module de réception(101),
- des moyens d'affichage (118) pour afficher des images vidéo correspondant aux signaux télévisuels reçus
caractérisé en ce qu'il comporte
- une interface (107) pour se connecter au réseau Internet (115),
- une mémoire d'éléments à incruster (113) sur l'image vidéo pour mémoriser notamment des textes de messages à afficher, reçus via le réseau Internet;
- un module de superposition (114) pour superposer à l'image vidéo une fenêtre graphique (119) destinée à afficher les textes des messages mémorisés.
- une mémoire de programmes (111) et une mémoire de données (112) pour recevoir, depuis le réseau Internet (115), et mémoriser des messages sous forme de données numériques, la mémoire de programmes comprenant une fonction de définition de la zone graphique (142) pour limiter la fenêtre graphique (119) à une ligne de texte
- un microprocesseur (109) connecté au moyen d'un bus bidirectionnel de communication (110) à l'interface (107) de connexion au réseau Internet (115), aux différentes mémoires (111, 112, 113) et au module de superposition (114), pour gérer le fonctionnement des différents éléments auxquels il est connecté.

2. Appareil de réception (100) selon la revendication 1 caractérisé en ce que la mémoire de programmes (111) comprend une fonction de défilement (144) pour faire défiler, dans la fenêtre graphique (119) limitée à une ligne de texte, le texte d'un message mémorisé dans la mémoire d'éléments à incruster (113).

3. Appareil de réception (100) selon l'une des revendications 1 ou 2, caractérisé en ce qu'il comprend des moyens (122, 149) pour avertir de la présence de nouveaux messages mémorisés dans la mémoire de données (112).

4. Appareil de réception (100) selon l'une des revendications 1 à 3, caractérisé en ce qu'il comprend des moyens (120, 121) pour imprimer des messages mémorisés ou des éléments associés à ces messages.

5. Appareil de réception (100) selon l'une des revendications 1 à 4, caractérisé en ce qu'il comprend des moyens (107, 148) pour automatiquement établir une connexion au réseau Internet (115) et mémoriser dans la mémoire de données (112) des messages.

6. procédé d'affichage sur un écran de télévision (118) de messages reçus depuis un réseau Internet (115) comportant les étapes consistant à :
- établir, au moyen notamment d'une interface de communication (107), une connexion avec un réseau Internet (115);
caractérisé en ce qu'il comporte les étapes supplémentaires consistant à :
- mémoriser dans une mémoire de données (112) des messages réservés reçus depuis le réseau internent (115);
- sélectionner des messages mémorisés ;
- afficher successivement et progressivement chaque message sélectionné dans une fenêtre graphique (118), limitée en hauteur à une ligne de texte, d'une image de télévision.

7. Procédé d'affichage selon la revendication 6 caractérisé en ce que l'affichage successif et progressif des messages sélectionnés est réalisé dans la fenêtre graphique (118) limitée en hauteur à une ligne de texte, chaque message sélectionné étant affiché de façon défilante.

8. Procédé d'affichage selon la revendication 7, caractérisé en ce qu'il comprend l'étape supplémentaire consistant à contrôler par des actions de retour et de contrôle de vitesse l'affichage progressif des messages sélectionnés.

9. Procédé d'affichage selon l'une des revendications 6 à 8 caractérisé en ce qu'il comprend l'étape supplémentaire consistant à établir automatiquement une connexion Internet et mémoriser ainsi des messages à des intervalles de temps réguliers.
